Europäisches Patentamt

European Patent Office

Office européen des brevets

(19)

(11) Numéro de publication : **0 519 874 A1**

## (12) DEMANDE DE BREVET EUROPEEN

(21) Numéro de dépôt : **92810470.2**

(22) Date de dépôt : **18.06.92**

(51) Int. Cl.⁵ : **A47J 37/07**

(30) Priorité : **19.06.91 CH 1813/91**

(43) Date de publication de la demande :
**23.12.92 Bulletin 92/52**

(84) Etats contractants désignés :
**AT BE CH DE DK ES FR GB IT LI NL PT SE**

(71) Demandeur : **Crevoisier, Nicolas**
**c/o Metafil N. Crevoisier**
**CH-2718 Lajoux/JU (CH)**

(72) Inventeur : **Crevoisier, Nicolas**
**CH-2718 Lajoux/JU (CH)**

(74) Mandataire : **Rochat, Daniel Jean et al**
**Bovard SA Ingénieurs-Conseils ACP**
**Optingenstrasse 16**
**CH-3000 Bern 25 (CH)**

(54) **Appareil à griller ou à rôtir des aliments.**

(57)     L'appareil à griller ou rôtir des aliments comporte un organe de présentation (1) destiné à supporter les aliments en regard d'une source de chaleur, un support (2) et des moyens de liaison (8,9) qui maintiennent l'organe de présentation (1) dans un emplacement fixe mais réglable et permettent d'éloigner ou de rapprocher cet organe de la source de chaleur.

FIG. 1

EP 0 519 874 A1

La présente invention vise à réaliser un perfectionnement dans les appareils à griller ou à rôtir des aliments, et plus spécialement dans ceux de ces appareils qui sont destinés à être installés en plein air sur un lieu de pique-nique ou sur un lieu de camping, ou à la cheminée, donc qui sont conçus de façon à être démontables et portatifs.

Comme l'enseigne le brevet français FR-2 557 443, ces appareils comportent souvent une tige verticale fixée par sa base à un pied et il est désirable que la grille utilisée pour supporter et présenter les aliments en regard de la source de chaleur puisse être, d'une part, déplacée en rotation autour de cette tige et, d'autre part, placée à la hauteur voulue par rapport à la source de chaleur. Les appareils connus comportent, dans ce but, des moyens de liaison, de différents types, entre la grille et la tige, par exemple des charnons fixés à des emplacements fixes le long de la tige et des gonds fixés soit à la grille, soit à d'autres organes venant se placer à la hauteur voulue sur cette dernière.

Le but de la présente invention est de créer un appareil à griller ou rôtir des aliments dans lequel les moyens de liaison entre l'organe de présentation des aliments et la tige permettent de réaliser un déplacement relatif plus sûr, plus progressif et plus facile qu'avec les moyens connus, ces moyens étant tout de même remarquablement simples.

Dans ce but, la présente invention a pour objet un appareil à griller ou rôtir des aliments comportant un organe de présentation destiné à supporter les aliments en regard d'une source de chaleur, un support et des moyens de liaison qui maintiennent l'organe de présentation dans un emplacement fixe mais réglable et permettent d'éloigner ou de rapprocher cet organe de la source de chaleur, caractérisé en ce que le support comporte une tige rigide munie d'une rainure hélicoïdale et en ce que les dits moyens de liaison consistent en élément tubulaire solidaire de l'organe de présentation, engagé sur la tige et comportant un bossage intérieur engagé dans la rainure, de sorte que l'organe de présentation peut être déplacé par vissage sur la tige.

Sous un autre aspect, l'invention a pour objet un dispositif de liaison entre un organe de présentation destiné à supporter des aliments à griller ou à rôtir en regard d'une source de chaleur et un support de cet organe de présentation, caractérisé en ce que le support et l'organe de présentation sont reliés l'un à une tige rigide présentant une rainure hélicoïdale et l'autre à un manchon engagé sur la tige, et en ce que le manchon comporte un bossage intérieur engagé dans la rainure de manière à conduire un déplacement relatif par vissage entre la tige et le manchon.

On va décrire ci-après, à titre d'exemple, diverses formes de réalisation de l'appareil selon l'invention en se référant au dessin annexé dont

la fig. 1 est une vue partielle à échelle agrandie en coupe d'une forme d'exécution de l'appareil selon l'invention et

les fig. 2, 3 et 4 sont des vues schématiques à échelle réduite, montrant trois utilisations différentes de l'appareil

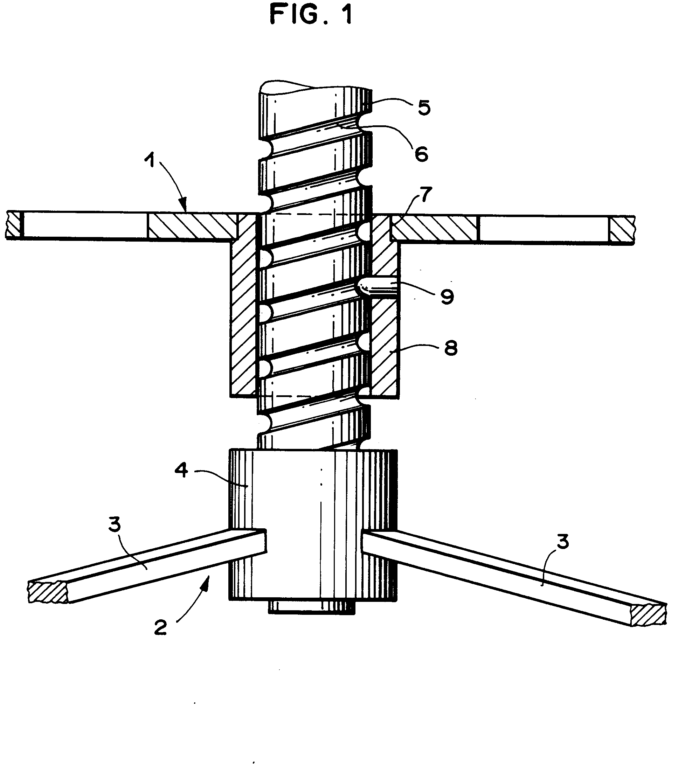

La fig. 1 montre le principe des moyens de liaison prévus entre l'organe de présentation 1 et le support 2 de cet organe de présentation. Ici l'organe de présentation est une plaque plane, ayant la forme d'une grille destinée à supporter des aliments à griller ou rôtir. Cette grille peut être constituée d'une plaque d'acier inoxydable, par exemple de forme circulaire, dans laquelle des ouvertures ont été découpées par usinage. Le support 2 comporte un trépied 3, constitué de trois barres fixées obliquement à une pièce cylindrique 4. Une tige 5, cylindrique, est fixée par son extrémité inférieure à la pièce 4, par exemple par soudage. Dans la tige verticale 5 est usinée une gorge hélicoïdale 6, ayant un profil en arc de cercle. La grille 1 est fixée par engagement à force et sertissage dans une saignée 7, ménagée dans un manchon 8, dont le diamètre intérieur est ajusté au diamètre extérieur de la tige 5. Une goupille 9 est chassée dans une ouverture transversale ménagée dans la paroi du manchon 8. Cette goupille 9 comporte à son extrémité interne un arrondi et son diamètre correspond à la largeur de la rainure hélicoïdale 6.

On obtient ainsi, par des moyens très simples, un guidage sûr de la plaque 1 le long de la tige 5. Le pas de la rainure hélicoïdale 6 sera choisi de façon à ce que le déplacement de la grille 1 en hauteur, pour chaque tour, soit aussi grand que possible, en tenant compte de la nécessité que cette grille reste stable lorsqu'elle n'est pas actionnée, autrement dit que, sous l'effet du poids des aliments qu'elle porte et de son poids propre, elle ne tourne pas spontanément mais au contraire soit maintenue immobile par le frottement de l'extrémité intérieure de la goupille 9 dans la rainure 6.

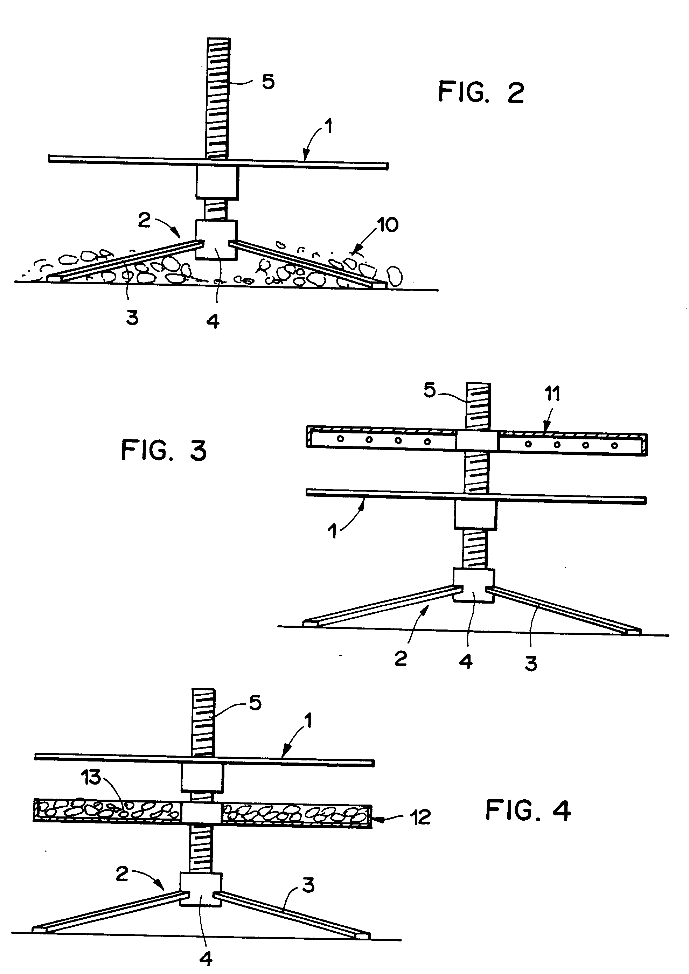

Les fig. 2, 3 et 4 montrent trois formes d'utilisation différentes du support 2 équipé de la grille 1.

Selon la fig. 2, un feu de charbon de bois ou de pierres volcaniques chauffées par gaz, désigné par 10, est formé directement sur le trépied 2, entre les barres de support 3.

Selon la disposition de la fig. 3, l'extrémité supérieure de la tige 5 est équipée d'un corps de chauffe 11, de type à infrarouge, par exemple un corps de chauffe électrique. Ce corps de chauffe peut être monté soit de façon amovible mais fixe sur l'extrémité de la tige 5, soit de façon à pouvoir être réglé en hauteur, auquel cas il pourrait être équipé d'un manchon analogue au manchon 8 et d'une goupille analogue à la goupille 9. Il peut être disposé en dessous ou au dessus de la grille portant les aliments.

Selon la fig. 4, la tige 5 est libre à son extrémité supérieure mais elle porte au-dessus de la pièce 4 un support 12 qui peut également être fixe ou mobile, qui sera équipé de préférence d'un ou plusieurs brûleurs à combustible liquide ou à gaz, par exemple à gaz butane, et qui est agencé de façon à recevoir un garnissage d'éléments 13 tels que des éléments de pierre volcanique, susceptibles de se chauffer en présence de la flammme du ou des brûleurs et de rayonner ensuite de la chaleur vers le haut en direction de la grille 1.

Dans les trois utilisations, le déplacement continu de la grille 1 par rapport à la source chaleur, permet d'ajuster finement l'intensité du chauffage. il permet aussi d'amener les aliments à griller à portée de main en cas de besoin.

On notera que ces trois utilisations sont données ici à simple titre d'exemple et n'excluent nullement, dans le cadre de l'invention, d'autres utilisations possibles ou d'autres formes d'exécution. Au lieu que la grille 1 soit une plaque circulaire portant le manchon 8 dans sa partie centrale, elle pourrait être une plaque d'une autre forme, par exemple rectangulaire, ou même une plaque dissymétrique ayant d'un côté un emplacement pour la mise en place des aliments à griller ou à rôtir et, de l'autre côté, par exemple des moyens de préhension facilitant la rotation de la grille à la main pour amener les aliments préparés en regard de la source de chaleur.

Il se pourrait aussi que dans certaines applications, on ne désire pas que la grille soit mobile en rotation mais essentiellement qu'elle soit réglable en hauteur. Dans ce cas, on pourrait réaliser le support de façon que la tige soit mobile en rotation autour de son axe. La grille serait alors guidée de façon à ne pas pouvoir tourner avec la tige mais à se déplacer, parallèlemenet à elle-même en hauteur, vers le haut ou vers le bas.

D'autre part, l'organe de présentation décrit pourrait aussi, au lieu d'être constitué par une grille plane, comporter une ou plusieurs pointes, par exemple du genre utilisé pour la réalisation de brochettes, d'autres variantes encore sont possibles, l'application aux fours à raclette étant également englobée.

## Revendications

1. Appareil à griller ou rôtir des aliments comportant un organe de présentation destiné à supporter les aliments en regard d'une source de chaleur, un support et des moyens de liaison qui maintiennent l'organe de présentation dans un emplacement fixe mais réglable et permettent d'éloigner ou de rapprocher cet organe de la source de chaleur, caractérisé en ce que le support comporte une tige rigide munie d'une rainure hélicoïdale et en ce que les dits moyens de liaison consistent en un élément tubulaire solidaire de l'organe de présentation, engagé sur la tige et comportant un bossage intérieur engagé dans la rainure, de sorte que l'organe de présentation peut être déplacé par vissage sur la tige.

2. Appareil selon la revendication 1, caractérisé en ce que l'organe de présentation a une forme plane et joue le rôle d'une grille, la tige étant disposée verticalement.

3. Appareil selon la revendication 2, caractérisé en ce que le pas de la rainure hélicoïdale est suffisamment petit pour que la grille soit normalement immobilisée par le frottement sans organe de blocage particulier.

4. Appareil selon la revendication 3, caractérisé en ce que la grille comporte à sa périphérie un ou des moyens de préhension facilitant son entraînement en rotation à la main.

5. Appareil selon la revendication 1, caractérisé en ce que la tige est solidaire d'un pied disposé de manière à ménager un espace libre suffisant pour la mise en place de la source de chaleur.

6. Appareil selon la revendication 5, caractérisé par des moyens de maintien de la source de chaleur situés à l'extrémité supérieure de la tige.

7. Appareil selon la revendication 5, caractérisé en ce que la source de chaleur est un corps de chauffe à infrarouge ou un foyer à combustible solide, ou comporte un brûleur à combustible gazeux ou liquide.

8. Appareil selon la revendication 1, caractérisé en ce que la tige est mobile en rotation autour de son axe et solidaire d'un organe d'entraînement.

9. Dispositif de liaison entre un organe de présentation destiné à supporter des aliments à griller ou à rôtir en regard d'une source de chaleur et un support de cet organe de présentation, caractérisé en ce que le support et l'organe de présentation sont reliés l'un à une tige rigide présentant une rainure hélicoïdale et l'autre à un manchon engagé sur la tige, et en ce que le manchon comporte un bossage intérieur engagé dans la rainure de manière à conduire un déplacement relatif par vissage entre la tige et le manchon.

# FIG. 1

FIG. 2

FIG. 3

FIG. 4

Office européen
des brevets

**RAPPORT DE RECHERCHE EUROPEENNE**

Numero de la demande

EP    92 81 0470

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-U-8 621 460 (HAMELE)<br>* page 5, ligne 31 - page 6, ligne 12; revendication 2; figures * | 1-3,8,9 | A47J37/07 |
| Y | | 4,5,7 | |
| | --- | | |
| D,Y | FR-A-2 557 443 (CANDELA)<br>* revendications 1,6; figure 1 * | 4,5,7 | |
| | --- | | |
| X | US-A-3 013 550 (MURCHIE)<br>* colonne 2, ligne 42 - ligne 52; figures 1,2 * | 1-3,8,9 | |
| A | | 7 | |
| | --- | | |
| X | CH-A-562 596 (NOVAL S.A.)<br>* colonne 1, ligne 19 - ligne 47; figure 1 * | 1,5-9 | |
| | ----- | | |
| | | | **DOMAINES TECHNIQUES RECHERCHES (Int. Cl.5)**<br><br>A47J |

Le présent rapport a été établi pour toutes les revendications

| Lieu de la recherche | Date d'achèvement de la recherche | Examinateur |
|---|---|---|
| LA HAYE | 10 SEPTEMBRE 1992 | BODART P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)